# EUROPEAN PATENT SPECIFICATION

(11) **EP 2 908 590 B1**
(45) Date of publication and mention of the grant of the patent: **06.12.2017**
(21) Application number: 13844983.0
(22) Date of filing: 10.10.2013
(51) Int. Cl.: H04W 72/08

(54) **WIRELESS NETWORK TYPE OF COMMUNICATION DEVICE**
KOMMUNIKATIONSVORRICHTUNG DES DRAHTLOSEN NETZWERKTYPS
DISPOSITIF DE COMMUNICATION DU TYPE POUR RÉSEAU SANS FIL

(30) Priority: 12.10.2012 JP 2012227194
(43) Date of publication of application: 19.08.2015
(73) Proprietor: Panasonic Intellectual Property Management Co., Ltd., Osaka-shi, Osaka 540-6207 (JP)
(72) Inventor: TARU, Kosuke, Osaka-shi Osaka 540-6207 (JP); OKADA, Yukio, Osaka-shi Osaka 540-6207 (JP); DOBASHI, Kazuo, Osaka-shi Osaka 540-6207 (JP); FUJII, Takashi, Osaka-shi Osaka 540-6207 (JP)
(74) Representative: Appelt, Christian W.
(86) International application number: PCT/JP2013/006059
(87) International publication number: WO 2014/057682

(56) References cited:
- EP-A1- 1 732 276
- EP-A1- 1 879 410
- WO-A1-2012/037025
- JP-A- 2002 505 053
- JP-A- 2005 101 716
- JP-A- 2009 231 972
- JP-A- 2011 527 168
- US-A1- 2009 238 093

## Description

### Technical Field

The invention relates generally to wireless network type of communication devices and, more particularly, to a wireless network type of communication device configured to communicate by using different wireless networks for a primary station and an apparatus.

### Background Art

In a wireless network in which a wireless communication using an identical channel is performed between a primary station and secondary stations, various technologies for monitoring interference of a channel used between the primary station and an secondary station to select a channel so as to suppress the occurrence of interference have been proposed so far. A technology for performing a multihop communication using an identical channel in a communication cell constructed by a primary terminal (a primary station) and secondary terminals (secondary stations) is described in JP. 2012-70370 A. It also describes that when a secondary terminal receives a hello packet from a different communication cell, the technology evaluates interference by any other communication cell, and selects a new channel from a selection range to change the channel thereto when the interference has a large level.

On the occurrence of interference, it is effective to select an available channel from the selection range in order to avoid the interference. However, freely allocating a channel for each communication cell causes a comparatively long mean time up to selection of a channel to be used owing to round robin search for a channel having no influence of interference without constraint condition. There is also a possibility of shortage of free channels owing to a limit to selectable channel types (resource) because if a channel is selected without considering mutual interference among communication cells, the channel resource is consumed immediately.

EP 1 732 276 A1 shows an apparatus and a method for allocating a channel capable of minimizing interference between channels in a node on an Ad-hoc network using a plurality of wireless interfaces for communication are provided. The apparatus includes a receiving unit that receives information on channel allocation from neighboring nodes, a channel search unit that searches for channels through which the node can communicate with all the neighboring nodes with reference to the received information on channel allocation, and a channel allocation unit that allocates a channel to the wireless interfaces based on the result of the search, so that it is possible to improve efficiency of network bandwidth usage and decrease interference of the channels.

US 2009/0238093 A1 shows an electronic device that includes a search unit configured to search wireless communication devices for channels provided for establishing an ad hoc network. A measuring unit is configured to measure a receiving level of wireless signals received from the devices found by the search. An allocation unit is configured to generate an allocation result for the channels by adding a predetermined weight to each of the channels based on the strength of the measured receiving level of the wireless signals. A calculating unit is configured to calculate a radio interference power for each of the channels based on the allocation result obtained by the allocation unit. An establishing unit is configured to select the channel having a smallest radio interference power as calculated by the calculating unit and establish the ad hoc network for the selected channel.

EP 1 879 410 A1 relates to channel selection in ad hoc wireless networks. The document suggests a method of selecting a channel for a node in an ad hoc network of nodes. The method comprises increasing a preference score for a channel in response to receiving a stimulatory control message associated with the channel from another node; decreasing the preference score for the channel in response to receiving an inhibitory control message associated with the channel from another node; selecting a channel dependent on the preference score for the channel.

### Summary of Invention

It is an object of the present invention to provide a wireless network type of communication device capable of selecting a channel to be changed for a comparatively short time when interference occurs, and suppressing an increase in types of channels to be used while avoiding interference.

A wireless network type of communication device of the present invention includes a first wireless transceiver, a second wireless transceiver, a channel selector and a channel administrator. The first wireless transceiver is configured to communicate with a primary station via a first wireless network that is an ad hoc network. The second wireless transceiver is configured to communicate with an apparatus via a second wireless network. The channel selector is configured to select a channel to be used for the second wireless transceiver from a plurality of channels. The channel administrator is configured to obtain, through the first wireless transceiver, a channel used for any other communication device communicating with an apparatus corresponding thereto. The first wireless transceiver is configured to transmit a packet containing information on the channel selected by the channel selector. The channel administrator is configured, from a packet received by the first wireless transceiver, to extract and store information on a channel used for any other communication device communicating with an apparatus corresponding thereto. The channel selector is configured: to set a condition based on a set of information on channels stored in the channel administrator as well as respective interchannel interference; to set, based on the condition, a priority order of two or more channels to be selected which are available; and then to select a channel in the priority order, thereby selecting the channel to be used for the second wireless transceiver.

The invention has a configuration for communicating with the primary station via the first wireless network that is the ad hoc network and communicating with the apparatus via the second wireless network. In the configuration, when interference occurs, a channel to be changed is selected for a comparatively short time. In this configuration, an increase in types of channels to be used can be suppressed while avoiding interference.

In the wireless network type of communication device, it is preferable that the channel selector be configured: to determine a priority level per channel to set the priority order of two or more channels to be selected; to judge in order from a channel having a higher priority level whether or not it is available while, if it is judged to be unavailable, judging whether or not a channel having a next higher priority level is available; and to select a channel judged to be available at first as the channel to be used for the second wireless transceiver.

In the wireless network type of communication device, preferably the first wireless transceiver is configured to transmit a packet containing information on the channel selected by the channel selector as well as information, on a channel used by any other communication device communicating by one-hop for communication with an apparatus corresponding thereto, of the set of information on the channels stored in the channel administrator. Preferably the channel administrator is configured, from the packet received by the first wireless transceiver, to extract and store information on a channel used by any other communication device communicating by one-hop for communication with an apparatus corresponding thereto as well as information on a channel used by still any other communication device communicating by two-hop for an apparatus corresponding thereto. Preferably the channel selector is configured to set the priority order of channels to be selected which are available, based on the condition that the channel used by the communication device communicating by two-hop be given a higher priority level than the channel used by the communication device communicating by one-hop.

In the wireless network type of communication device, preferably the channel selector is configured to decrease a priority level of a channel judged to be unavailable until a prescribed time elapses from a point in time when the channel is judged to be unavailable.

In the wireless network type of communication device, preferably the first wireless transceiver has a function for transmitting a packet containing an interference degree representing a rate of interference received from at least one of any other apparatus and any other communication device during communication with a corresponding apparatus. Preferably the channel administrator is configured, from the packet received by the first wireless transceiver, to extract and store per channel an interference degree by as well as information on, a channel used for any other communication device communicating with an apparatus corresponding thereto. Preferably the channel selector is configured, when selecting a channel identical to that of any other communication device as the channel to be used for the second wireless transceiver, to set the priority order of channels to be selected which are available, based on the condition that a channel having a lower interference degree be given a higher priority level.

In the wireless network type of communication device, preferably the first wireless transceiver has a function for transmitting a packet containing an interference degree representing a rate of interference received from at least one of any other apparatus and any other communication device during communication with a corresponding apparatus. Preferably the channel administrator is configured, from the packet received by the first wireless transceiver, to extract and store per channel an interference degree by as well as information on, a channel used for any other communication device communicating with an apparatus corresponding thereto. Preferably the channel selector is configured, when selecting a channel identical to that of any other communication device as the channel to be used for the second wireless transceiver, to calculate a total of interference degrees per channel and to set the priority order of channels to be selected which are available, based on the condition that a channel having a smaller total of interference degrees be given a higher priority level.

In the wireless network type of communication device, preferably the first wireless transceiver is configured to transmit the packet containing the interference degree only in a case where the interference degree exceeds a specified reference degree.

In the wireless network type of communication device, preferably the channel administrator is configured to store a received signal strength when the first wireless transceiver receives a packet from any other communication device communicating with an apparatus corresponding thereto, where the received signal strength is associated with a channel used for the aforementioned any other communication device communicating with the apparatus. Preferably the channel selector is configured, when selecting a channel identical to that of any other communication device as the channel to be used for the second wireless transceiver, to set the priority order of channels to be selected which are available, based on the condition that a channel having a smaller received signal strength be given a higher priority level.

In the wireless network type of communication device, preferably the channel administrator is configured to find, per channel which is available, a quantity of any other communication devices each of which uses a channel for the second wireless transceiver. Preferably the channel selector is configured to set the priority order of channels to be selected which are available, based on the condition that a channel having a smaller quantity found by the channel administrator be given a higher priority level.

In the wireless network type of communication device, preferably the channel administrator has a blacklist and a whitelist. Each element of the blacklist has information on, identity contained in a packet when the packet transmitted between any other communication device and an apparatus corresponding thereto is received by the second wireless transceiver, and the channel for transmission of the packet. Each element of the whitelist has information on, identity of any other communication device, excluded from the blacklist, of any other communication devices each of which communicates through the first wireless transceiver, and the channel used for the communication device communicating with the apparatus corresponding thereto. Preferably the channel selector is configured to set the priority order of channels to be selected which are available, based on the condition that each channel registered on the whitelist be given a higher priority level than each channel registered on the blacklist.

In the wireless network type of communication device, preferably the channel selector is configured, when a channel is registered on the whitelist and used for any other communication device, to set the priority order of channels to be selected which are available, based on the condition that the channel be given a higher priority level than each channel, not used for any other communication device, of channels registered on the whitelist.

In the wireless network type of communication device, preferably the channel selector is configured, when all channels which are available are registered on the blacklist, to set the priority order of channels to be selected which are available, based on the condition that a channel having a smaller quantity of any other communication devices each of which information on identity is registered on the blacklist be given a higher priority level.

In the wireless network type of communication device, preferably the first wireless transceiver has a function for transmitting meter reading data by a meter installed in a consumer facility to the primary station and a function for receiving an instruction from the primary station. Preferably the second wireless transceiver is configured to communicate with the apparatus in the consumer facility.

### Brief Description of Drawings

FIG. 1 is a common block diagram of embodiments;
FIG. 2 illustrates a configuration of a wireless network in the embodiments;
FIG. 3 shows an operational example in embodiment 1;
FIG. 4 shows an operational example in embodiment 1;
FIG. 5 shows an operational example in embodiment 1;
FIG. 6 shows an operational example in embodiment 1;
FIG. 7 shows an operational example in embodiment 1; and
FIG. 8 shows an operational example in embodiment 3.

### Description of Embodiments

### (OVERALL CONFIGURATION)

The following embodiments will be explained as an example of a communication device equipped with a secondary station and a wireless terminal. The secondary station is attached to a wattmeter that is a meter installed in an electricity consumer facility. The wireless terminal is configured to communicate with an electric load that is an apparatus in the consumer facility, thereby administrating an operation of the electric load. The wireless terminal is capable of communicating with a gas meter, a water meter or various sensors besides the wattmeter installed in the consumer facility, and of administrating resource consumption such as gas or water besides electricity. That is, the wireless terminal is used for energy conservation or resource conservation in the consumer facility, or suppressing demand peak of energy or resource, or reducing an upper limit of energy or resource consumption in response to a request from an organization supplying the resource.

The secondary station is configured to receive meter reading data from the wattmeter or the like to transmit the meter reading data to a primary station. The primary station is shared with two or more secondary stations, and has a function for transmitting, to a host device, a set of respective meter reading data collected from the secondary stations in a lump. That is, the host device can remotely collect respective meter reading data measured by two or more consumer facilities via the primary station and the secondary stations.

The host device is managed by a resource supply organization such as an electric power company or a service provider acting for remote meter reading, and formed of a computer server. The host device may be however formed of two or more computers connected to a communication network. The host device is to communicate with two or more primary stations. However, just electricity of resources used for the consumer facility is explained hereinafter, but gas or water is similar thereto. In a case of gas, the meter is a gas meter and an apparatus is a gas-using apparatus. In a case of water, the meter is a flow meter and an apparatus is a faucet, a water heater or the like.

If the consumer facility is provided for each flat of an apartment building, each tenant of a tenant building or the like, the apartment building or the tenant building as a unit is provided with a primary station. If the consumer facility is provided for a detached house, a primary station is shared with two or more detached houses. It is assumed that a primary station is installed on an electric pole or in a specified consumer facility. However, if the primary station is configured to communicate with secondary stations by wireless communication, it is not limited by the installation location. The primary station is also configured to communicate with the host device via an exclusive communication path. The communication path may be a wired communication line or a wireless channel, but is desirably a wired communication line of which transmission medium is an optical fiber.

It is desirable that the secondary station be housed in an enclosure of the wattmeter. The wattmeter includes a measurement unit which is in the enclosure and configured to measure energy consumed in the consumer facility per prescribed time. The secondary station is configured to obtain, as meter reading data, the energy measured by the measurement unit per the prescribed time. The secondary station communicates with the primary station via an ad hoc network. That is, the secondary station is configured to communicate with the primary station via a wireless channel and to perform multihop communication capable of using any other secondary station(s) for a relay(s) in a communication route with the primary station. Therefore, the communication of a secondary station with any one of the primary stations may vary according to a state of channels between the secondary station and the primary stations.

The wireless terminal communicates with the secondary station via a fixed network. That is, the communication via a channel between the wireless terminal and the secondary station can be performed without changing the communication route regardless of a wireless channel or a wired communication line. However, the channel used for communication between the secondary station and the wireless terminal can be changed. The wireless terminal includes a function as a management device that is a core of a system called HEMS (Home Energy Management System) for managing energy consumed in a residential building. The wireless terminal has a function for transmitting energy consumed in the consumer facility to the secondary station, a function for receiving a request from the host device through the secondary station, a function for obtaining power consumed by electric loads or operating states of the electric loads, a function for instructing the electric loads to operate according to requests, and the like. The wireless terminal may be an electric load having a communication function. The embodiment to be explained below exemplifies mutual communication between the secondary station and the wireless terminal by a wireless channel, but may communicate using technology of power line communication (PLC).

It is assumed that channels are identified by carrier wave frequencies. However, the channels may be identified by positions of time slot in a case where the time slots for transmitting data are provided in a packet used for communication. The channels may be identified by both carrier wave frequencies and positions of the time slots. The number of available channels is limited to several tens as a maximum limit.

As stated above, the meter is provided with a communication function by adding the secondary station to the meter and functions as a smart meter. The smart meter is used for remote meter reading by communication with the primary station and serves administration of energy or resource consumption in the consumer facility by communicating with a wireless terminal corresponding thereto.

Hereinafter, a wireless network including a primary station, a secondary station, a wireless terminal and an apparatus is explained, and a relation between a host device and the primary station is not explained in detail. The aforementioned example distinguishes the secondary station and the wireless terminal as a HEMS configuration example, but the secondary station and the wireless terminal are not necessarily distinguished because information between the secondary station and the wireless terminal may not be transmitted by wireless communication. Therefore, a communication device means the secondary station and the wireless terminal in a case where it is unnecessary to distinguish the secondary station and the wireless terminal.

A communication network constructed between the secondary station and the primary station is called a first wireless network. A communication network constructed between the wireless terminal and the apparatus is called a second wireless network. As stated above, the first wireless network is an ad hoc network and permits multihop communication. The second wireless network has no limitation in particular, and either an ad hoc network or a fixed network is employed for. Channels used for the first wireless networks are allocated per primary station, and one type of channel is shared with two or more communication devices (secondary stations) communicating with one primary station when communication is performed by the first wireless network. On the other hand, a channel used by the second wireless network differs from the channel used by the first wireless network, and is selected so as not to interfere with the second wireless network constructed between any other communication device(s) (wireless terminal(s)) and an apparatus(es) corresponding thereto.

It is now assumed that ten or less channels are available to both the first wireless network and the second wireless network. Operational examples below will be explained using, as an example, any one of four available channels, six available channels or ten available channels. However, the number of channels can be selected appropriately.

### (EMBODIMENT 1)

As shown in FIG. 1, a wireless network type of communication device 10 in accordance with the present embodiment includes a first wireless transceiver 11, a second wireless transceiver 12, a channel selector 13 and a channel administrator 14.

The first wireless transceiver 11 is configured to communicate with a primary station 20 via a first wireless network NT1 that is an ad hoc network. The second wireless transceiver 12 is configured to communicate with an apparatus 40 via a second wireless network NT2. The channel selector 13 is configured to select a channel to be used for the second wireless transceiver 12 from a plurality of channels. The channel administrator 14 is configured to obtain, through the first wireless transceiver 11, a channel used for any other communication device 10 communicating with an apparatus 40 corresponding thereto.

The first wireless transceiver 11 is configured to transmit a packet containing information on the channel selected by the channel selector 13. The channel administrator 14 is configured, from a packet received by the first wireless transceiver 11, to extract and store information on a channel used for any other communication device 10 communicating with an apparatus 40 corresponding thereto.

The channel selector 13 is configured: to set a condition based on a set of information on channels stored in the channel administrator 14 as well as respective interchannel interference; and to set, based on the condition, a priority order of two or more channels to be selected which are available. The channel selector 13 is configured to select a channel in the priority order, thereby selecting the channel to be used for the second wireless transceiver 12.

The channel selector 13 may be configured: to determine a priority level per channel to set the priority order of two or more channels to be selected; and to judge in order from a channel having a higher priority level whether or not it is available while if it is judged to be unavailable, judging whether or not a channel having a next higher priority level is available. In this case, the channel selector 13 is further configured to select a channel judged to be available at first as the channel to be used for the second wireless transceiver 12.

The channel selector 13 may be also configured to decrease a priority level of a channel judged to be unavailable until a prescribed time elapses from a point in time when the channel is judged to be unavailable.

The first wireless transceiver 11 may have a function for transmitting a packet containing an interference degree representing a rate of interference received from at least one of any other apparatus(es) 40 and any other communication device(s) 10 during communication with a corresponding apparatus 40. In this case, the channel administrator 14 is configured, from the packet received by the first wireless transceiver 11, to extract and store per channel an interference degree by as well as information on, a channel used for any other communication device 10 communicating with an apparatus 40 corresponding thereto.

The channel selector 13 is configured, when selecting a channel identical to that of any other communication device 10 as the channel to be used for the second wireless transceiver 12, to set the priority order of channels to be selected which are available, based on the condition that a channel having a lower interference degree be given a higher priority level.

Alternatively, in a case where the first wireless transceiver 11 has a function for transmitting a packet containing an interference degree and the channel administrator 14 is configured, from the packet, to extract and store per channel an interference degree by as well as information on a channel, the channel selector 13 may be configured as follows. That is, when selecting a channel identical to that of any other communication device 10 as the channel to be used for the second wireless transceiver 12, the channel selector 13 calculates a total of interference degrees per channel. The channel selector 13 is configured to set the priority order of channels to be selected which are available, based on the condition that a channel having a smaller total of interference degrees be given a higher priority level.

In these cases, the first wireless transceiver 11 may be configured to transmit the packet containing the interference degree only in a case where the interference degree exceeds a specified reference degree.

The channel administrator 14 may be configured to store a received signal strength when the first wireless transceiver 11 receives a packet from any other communication device 10 communicating with an apparatus 40 corresponding thereto, where the received signal strength is associated with a channel used for the aforementioned any other communication device 10 communicating with the apparatus 40. In this case, the channel selector 13 is configured, when selecting a channel identical to that of any other communication device 10 as the channel to be used for the second wireless transceiver 12, to set the priority order of channels to be selected which are available, based on the condition that a channel having a smaller received signal strength be given a higher priority level.

The channel administrator 14 may be configured to find, per channel which is available, a quantity of any other communication devices 10 each of which uses a channel for the second wireless transceiver 12. In this case, the channel selector 13 is configured to set the priority order of channels to be selected which are available, based on the condition that a channel having a smaller quantity found by the channel administrator 14 be given a higher priority level.

The first wireless transceiver 11 may have a function for transmitting meter reading data by a meter installed in a consumer facility to the primary station 20 and a function for receiving an instruction from the primary station 20. The second wireless transceiver 12 may be configured to communicate with the apparatus 40 in the consumer facility.

The wireless network type of communication device 10 in accordance with the present embodiment is a communication device used for a communication system including a primary station 20 and two or more communication devices 10 as a first communication device of the two or more communication devices 10. The first communication device 10 communicates with a first apparatus 40. A second communication device 10, different from the first communication device 10, of the two or more communication devices 10 communicates with a second apparatus 40 different from the first apparatus 40. Hereinafter, the first communication device 10 is simply called a "communication device 10", and the second communication device 10 is called "any other communication device 10".

In HEMS having the aforementioned configuration, each of some communication devices 10 includes a secondary station 31 and a wireless terminal 32. The secondary station 31 is provided with a first wireless transceiver 31. The wireless terminal 32 is provided with a second wireless transceiver 12.

The communication device 10 is arranged so that a spatial distance between itself and an apparatus 40 corresponding thereto is smaller than a spatial distance between itself and any other communication device 10 or the primary station 20. Each of the first wireless transceiver 11 and the second wireless transceiver 12 has a transmission output corresponding to the spatial distances. In a case of this condition, if a spatial distance between two communication devices 10 is a distance that is need for two-hop, there is almost no interference between an apparatus 40 communicating with one communication device 10 and the other communication device 10 even if both of the communication devices 10 communicate with respective apparatuses 40 by an identical channel.

The present embodiment utilizes such a principle, thereby limiting a channel range to be allocated for the second wireless transceiver 12. In other words, it is possible to suppress an increase in types of channels to be used while preventing the occurrence of interference of communication between the communication device 10 and an apparatus 40 corresponding thereto by any other communication device(s) 10 or any other apparatus(es) 40.

A common channel is used by first wireless transceivers 11 of communication devices 10 communicating with one primary station 20. Though the channel used by the first wireless transceivers 11 is variable, it is assumed that the channel used by the first wireless transceivers 11 is not changed for convenience in the embodiment. As an example, a maximum number of channels available for the communication devices 10 is six. That is, six channels are available to both the first wireless transceivers 11 and the second wireless transceivers 12, and one channel thereof is allocated for the first wireless transceivers 11. In this case, the number of channels available for the second wireless transceivers 12 is five.

Each communication device 10 is provided with a channel selector 13 that selects channels to be used by corresponding first and second wireless transceivers 11 and 12. That is, the channel selector 13 is to select a channel to be used by the second wireless transceiver 12 from five channels except for a channel used by the first wireless transceiver 11. In addition, the channel selector 13 is to select the channel so that interference does not occur by the communication between any other communication device 10 and an apparatus 40 corresponding thereto. As stated above, if a spatial distance between two communication devices 10 is a distance that is need for two-hop, it is possible to basically reduce a possibility that interference occurs even if an identical channel is used. Therefore, the channel selector 13 disables the use of a channel(s) selected by any other communication device(s) 10 capable of communicating by one-hop, and enables the use of a channel(s) selected by still any other communication device(s) 10 of which communication is need for two-or-more-hop. Hereinafter, the communication device 10 capable of communicating by one-hop is called an "adjacent communication device 10".

The communication device 10 receives a packet from an adjacent communication device 10, thereby being notified of information on a channel used for the second wireless transceiver 12 of the adjacent communication device 10 communicating with an apparatus 40 corresponding thereto. The packet may be a packet used between communication devices 10 (i.e., secondary stations 31) regardless of packet type, but desirably a hello packet is used. Each secondary station 31 transmits a hello packet per prescribed time in order to judge whether or not communication is permitted. Desirably a hello packet is transmitted at constant intervals during steady state, which is not indispensable. A hello packet may be transmitted at irregular intervals.

The communication device 10 includes a channel administrator 14 configured to obtain, from a hello packet received from an adjacent communication device 10, information on a channel used for the adjacent communication device 10 communicating with an apparatus 40 corresponding thereto. That is, the channel administrator 14 has a function for extracting the information on the channel from the hello packet to store the extracted information on the channel. The channel selector 13 selects a channel to be used for a corresponding second wireless transceiver 12 from five channels which are available except for channels stored in a corresponding channel administrator 14.

Main parts of hardware, except for first and second wireless transceivers 11 and 12, of the communication device 10 is formed of a device configured to operate along with a program. Examples of this type of device include: a combination of a discrete microprocessor and a discrete memory; a microcomputer; a DSP (Digital Signal Processor); an FPGA (Field-Programmable Gate Array); and the like. The microcomputer is formed of one chip including a microprocessor and a memory.

In an illustrated example, the communication device 10 is formed of a secondary station 31 and a wireless terminal 32, and accordingly each of the secondary station 31 and the wireless terminal 32 includes a device described above. The secondary station 31 is provided with a first wireless transceiver 11, and the wireless terminal 32 is provided with a second wireless transceiver 12. Either the secondary station 31 or the wireless terminal 32 may be provided with a channel selector 13 and a channel administrator 14, but in a case of HEMS, it is desirable that the wireless terminal 32 be provided with them because the secondary station 31 has a restriction on hardware resource thereof. In a case where the secondary station 31 and the wireless terminal 32 uses a wireless channel therebetween, a channel used by the first wireless transceiver 11 is selected for communication from the secondary station 31 to the wireless terminal 32, and a channel used by the second wireless transceiver 12 is selected for communication from the wireless terminal 32 to the secondary station 31.

A detailed operation example is explained with reference to an arrangement example shown in FIG. 2. The following explanation is performed by dividing a function of the communication device 10 into a secondary station 31 that communicates by a first wireless network NT1 and a wireless terminal 32 that communicates by a second wireless network NT2. Therefore, in the following explanation, a secondary station 31 or a wireless terminal 32 is used instead of a communication device 10 as needed. An "adjacent secondary station 31" is used instead of an "adjacent communication device 10". The secondary station 31 may be provided with a channel selector 13 and a channel administrator 14, but it is hereinafter assumed that the wireless terminal 32 is provided with them.

In the illustrated example, a secondary station 31 in question is "A". Secondary stations 31 adjacent to the secondary station 31 of "A" are "B", "C", "D" and "E". Secondary stations 31 communicating by two-hop from the secondary station 31 of "A" are "F", "G", "H", "I", "J" and "K". Each secondary station 31 communicates with one wireless terminal 32 corresponding thereto. The wireless terminals 32 are distinguished from each other by lower-case alphabetic characters "a" to "k" corresponding to upper-case alphabetic characters "A" to "K", respectively. That is, the secondary station 31 of "A" communicates with the wireless terminal 32 of "a", and the secondary station 31 of "B" communicates with the wireless terminal 32 of "b". Thus, each secondary station 31 corresponds one-by-one to a secondary station 31. A region D1 surrounded by an inner circle of two regions D1 and D2 shown in FIG. 2 represents a range that allows the communication with the secondary station 31 of "A" in question by one-hop. The region D2 between the inner circle and an outer circle represents a range that allows the communication with the secondary station 31 of "A" in question by two-hop.

It is now assumed that a channel for the wireless terminal 32 of "a", which corresponds to the secondary station 31 of "A", communicating with an apparatus 40 corresponding thereto is selected. In an example, a channel administrator 14 of the wireless terminal 32 of "a" stores a set of information on channels used for wireless terminals 32 corresponding to adjacent secondary stations 31 as shown in FIG. 3A. Communication between the secondary stations 31 of "B" and "E" requires two-hop, and accordingly an identical channel "2" is used for the wireless terminal 32 of "b" corresponding to the secondary station 31 of "B" and the wireless terminal 32 of "e" corresponding to the secondary station 31 of "E".

Six channels are available and a channel "1" thereof is used by a first wireless network NT1 including a primary station 20. A channel "3" is used by the wireless terminal 32 of "d" corresponding to the secondary station 31 of "D". A channel "4" is used by the wireless terminal 32 of "c" corresponding to the secondary station 31 of "C". A list of FIG. 3B shows a usage status of the six channels. The channel selector 13 thereof selects a channel used for the wireless terminal 32 of "a" corresponding to the secondary station 31 of "A" communicating with an apparatus 40 corresponding thereto, based on a relation shown in FIG. 3B.

Based on conditions prescribed below, the channel selector 13 is to select a channel for communication with a corresponding apparatus 40. A condition (2) is used if a condition (1) is not satisfied. A condition (3) is used if the condition (2) is not satisfied. That is, the priority of conditions for channel selection is set in order of the conditions (1), (2) and (3). However, in a case where two or more channels meet a condition having an identical priority, the selection is performed from a channel having a smaller channel number.
(1) Selecting a free channel;
(2) Selecting a channel used for an adjacent communication device 10 communicating with an apparatus 40 corresponding thereto; and
(3) Selecting a channel used for the first wireless network NT1.

Thus, the channel selector 13 determines a priority level per channel, thereby setting a priority order of channels to be selected. In this case, the channel selector 13 judges in order from a channel having a higher priority level whether or not it is available while if it is judged to be unavailable, judging whether or not a channel having a next higher priority level is available; and to select a channel judged to be available at first as the channel to be used for the second wireless transceiver 12.

A wireless terminal 32 corresponding to a secondary station 31 of which communication is need for 2-hop can select a channel identical to a channel used for the second wireless transceiver 12. It is therefore possible to select a channel based on the condition (1) in many cases. That is, there is almost no possibility that a channel for a wireless terminal 32 communicating with an apparatus 40 corresponding thereto is selected based on the condition (2) or the condition (3). In a case where wireless terminals 32 corresponding to adjacent secondary stations 31 use channels shown in FIG. 3A, if the aforementioned conditions are used, the wireless terminal 32 corresponding to the secondary station 31 of "A" selects a channel in a priority order of "5", "6", "2", "3", "4" and "1". That is, the channel selector 13 first selects a channel "5" of a free channel based on the condition (1), and then selects a channel "6" if the channel "5" is unavailable. Hereinafter similarly the channel selector 13 judges whether or not a channel selected in the priority order is available, and allows the second wireless transceiver 12 to operate on the channel judged to be available.

In a case where the channel "5" is selected as stated above, if interference occurs by influence of operations of any other devices and environmental noise, the channel selector 13 selects the channel "6" in the priority order. If the channel "6" is also unavailable owing to interference, the channel "5" of which priority level is higher than that of the channel "6" is selected again. In this case, the channel selector 13 cannot select any channel of which priority level is lower than that of the channel "6".

In order to solve the problem, desirably the channel selector 13 has a function for decreasing a priority level of a channel judged to be unavailable by charging penalty until a prescribed time elapses from a point in time when the channel is judged to be unavailable. The prescribed time is longer than an estimated time from the point in time when the channel is judged to be unavailable to a point in time when the channel becomes available. The prescribed time may be a constant time determined as a design value, and may be varied according to environment in which the communication device 10 is installed.

In the example stated above, the channels "5" and "6" are judged to be unavailable. Just after the channel "6" is judged to be unavailable, each priority level of the channels "5" and "6" is decreased temporarily, and the priority order of channels which are available temporarily becomes "2", "3", "4", "5", "6" and "1". That is, the channel selector 13 selects the channel "2" after the channel "6". There is a possibility that interference occurs because the channel "2" is used by the wireless terminals 32 of "b" and "e" corresponding to the adjacent secondary stations 31 of "B" and "E". The channel selector 13 evaluates an interference degree thereof, and selects the channel "2" if it is judged to be available. Even at this point, the channels "5" and "6" is followed by the channel "1" in the priority order because the channel used for the first wireless network NT1 is not used for the second wireless network NT2 as a general rule.

In a case where the channel selector 13 selects a channel used for a wireless terminal 32 corresponding to an adjacent secondary station 31 based on the condition (2), if two or more adjacent secondary stations 31 exist, it is desirable that channel selection be performed based on any procedure below. When a channel selected based on the condition (2) is used, a probability that interference occurs in the communication becomes high because an identical channel is used for a wireless terminal 32 corresponding to an adjacent secondary station 31 communicating with an apparatus 40 corresponding thereto. There is accordingly possibility that channel selection time becomes long if the priority order is fixed such that a channel is selected in order from a channel having a smaller channel number.

It is therefore desirable that the channel selector 13 evaluate an interference degree of each of channels used for the wireless terminals 32 corresponding to the adjacent secondary stations 31 to set a priority order such that a channel having a smaller interference degree is given a higher priority level. An indicator such as received signal strength indicator (RSSI value), interference degree, a quantity of communication devices 10 using an identical channel, and the like may be used for evaluation of an interference degree per channel. The interference degree is a rate of interference by traffic, namely a rate of interference by any other apparatus(es) 40 or any other communication device(s) 10 during communication with a corresponding apparatus 40, and is a rate of interference by traffic during a constant period for example.

In a case where the RSSI value is employed as an indicator of interference, the channel administrator 14 obtains not only a set of information on channels used by wireless terminals 32 corresponding to adjacent secondary stations 31 but also RSSI values when the secondary station 31 receives packets from adjacent secondary stations 31. A packet for obtaining the RSSI value is not limited to a hello packet. If an RSSI value is obtained from each secondary station 31, the channel administrator 14 stores a correlation between each secondary station 31 (or wireless terminal 32) and a combination of channel and RSSI value as shown in FIG. 4A.

The channel selector 13 arranges the set of information shown in FIG. 4A in channel order to obtain RSSI values in channel order as shown in FIG. 4B. In this example, it obtains an RSSI value about two secondary stations 31 of "B" and "E" because the channel "2" is used by the wireless terminals 32 corresponding to the two secondary stations 31. That is, when two or more RSSI values are obtained from an identical channel, a maximum RSSI value is selected. In the illustrated example, a larger value of the RSSI values "-70" and "-75" is "-70", and accordingly the RSSI value of the channel "2" becomes "-70".

In a case where an identical channel is used by a wireless terminal 32 corresponding to an adjacent secondary station 31, it is considered that an interference possibility by a channel having a smaller RSSI value would be lower. Accordingly, the channel selector 13 determines priority levels such that a channel having a smaller RSSI value is selected preferentially. In other words, the channel selector 13 sets a priority order such that a channel having a smaller RSSI value is given a higher priority level because a channel having a smaller RSSI value would cause a smaller interference.

That is, in the example of FIG. 4B, the priority order of channels becomes "4", "2", "3" and "1". Thus, even if it is necessary to select a channel identical to that of a wireless terminal 32 corresponding to an adjacent secondary station 31, the wireless terminal 32 can communicate with a corresponding apparatus 40 by selecting a channel having a low probability of communication interference. It is also possible to select a channel to be used for a comparatively short time because a channel selection standard is clear.

When the interference degree is employed as an indicator of interference, the channel administrator 14 obtains not only a set of information on channels used by wireless terminals 32 corresponding to adjacent secondary stations 31 but also interference degrees from the adjacent secondary stations 31 during the wireless terminals 32 communicating with respective apparatuses 40. The interference degrees are obtained from packets received from the adjacent secondary stations 31. An interference degree may be obtained from not only a hello packet but also any type of packet. If receiving interference degrees from the adjacent secondary stations 31, the channel administrator 14 stores a relation between each secondary station 31 (or wireless terminal 32) and a combination of channel and interference degree as shown in FIG. 5A.

The channel selector 13 arranges a set of information shown in FIG. 5A in channel order to obtain interference degrees in channel order as shown in FIG. 5B. When two or more interference degrees are obtained from an identical channel, a maximum interference degree is selected. In the illustrated example, interference degrees by wireless terminals 32 of "b" and "e" corresponding to secondary stations 31 of "B" and "E" using the channel "2" are "0.2" and "0.01", respectively, and accordingly a larger interference degree "0.2" is allocated to the channel "2".

In a case where a channel identical to that of a wireless terminal 32 corresponding to an adjacent secondary station 31 is used, it is considered that an interference possibility by a channel having a smaller interference degree would be smaller. Accordingly, the channel selector 13 determines priority levels such that a channel having a smaller interference degree is selected preferentially. In other words, the channel selector 13 sets a priority order such that a channel having a smaller interference degree is given a higher priority level because a channel having a smaller interference degree would cause a smaller interference.

In the example of FIG. 5B, the priority order of channels becomes "3", "2", "4" and "1". Thus, even if interference degrees are employed as selection references, it is possible to select a channel for a comparatively short time.

In the aforementioned example, when two or more interference degrees are obtained from an identical channel, the channel selector 13 selects a maximum interference degree, but may use a total of the interference degrees. As shown in FIG. 6A, if the channel administrator 14 stores interference degrees obtained from the secondary stations 31, the channel selector 13 arranges a set of information shown in FIG. 6A in channel order to obtain interference degrees in channel order as shown in FIG. 6B. In the example of FIG. 6B, when two or more interference degrees are obtained from an identical channel, a total of all interference degrees by the identical channel is used instead of a maximum identical channel. Specifically, interference degrees by wireless terminals 32 of "b" and "e" corresponding to secondary stations 31 of "B" and "E" using the channel "2" are "0.2" and "0.1", respectively, and accordingly the interference degree of the channel "2" becomes "0.3" by totaling.

The channel selector 13 determines priority levels such that a channel having a smaller interference degree is selected preferentially like the aforementioned example. In other words, the channel selector 13 sets a priority order such that a channel having a smaller total of interference degrees is given a higher priority level because a channel having a smaller total of interference degrees would cause a smaller interference. Therefore, in the example of FIG. 6B, the priority order of channels becomes "4", "3", "2" and "1".

An interference degree by a wireless terminal 32 corresponding to an adjacent secondary station 31 is obtained by a packet. Therefore, there is a possibility that a traffic amount in the first wireless network NT1 increases if all secondary stations 31 transmit their packets each of which contains an interference degree. Accordingly, a configuration in which an interference degree is transmitted to any other secondary station(s) 31 only when the interference degree exceeds a specified reference degree may be adopted. That is, the first wireless transceiver 11 may be configured to transmit a packet containing an interference degree only when the interference degree exceeds a specified reference degree.

It is now assumed that the reference degree is 0.1. In the example of FIG. 5A, an interference degree by the wireless terminal 32 of "d" corresponding to the secondary station 31 of "D" is 0.02, and an interference degree by the wireless terminal 32 of "e" corresponding to the secondary station 31 of "E" is 0.01. Therefore, these secondary stations 31 do not transmit their interference degrees. Only the secondary stations 31 of "B" and "C" transmit their interference degrees, and accordingly a traffic amount in the first wireless network NT1 decreases.

In the aforementioned operation, even if two or more adjacent secondary stations 31 exist, the channel administrator 14 receives interference degrees from only a part of the secondary stations 31. The channel selector 13 evaluates that the interference degree by the channel "3" of the list shown in FIG. 5B is equal to or less than the lower limit. That is, since the secondary station 31 of "D" does not transmit an interference degree thereof, the channel selector 13 evaluates that the interference degree by the channel "3" is equal to or less than the lower limit in the example. The secondary station 31 of "B" transmits an interference degree with respect to the channel "2", but the secondary station 31 of "E" does not transmit an interference degree. In this example, the channel selector 13 has no need for a magnitude comparison process of interference degree. In FIG. 5A, when the secondary stations 31 of "D" and "E" do not transmit their interference degrees, the channel selector 13 sets a priority order of "3", "2", "4" and "1".

In a case where a quantity of communication devices 10 using an identical channel is employed as an interference indicator, the channel administrator 14 finds per channel a quantity of communication devices 10 using an identical channel. For example, when channels used for communication devices 10 communicating with respective apparatuses 40 are in a status shown in FIG. 3A, FIG. 7 summarizes a quantity of communication devices 10 per channel.

In this case it is considered that an identical channel used by communication devices 10 of which quantity is smaller would have lower interference possibility. Therefore, the channel selector 13 preferentially selects a channel corresponding to a smaller quantity based on a quantity, as selection reference, of communication devices 10 using an identical channel. In other words, a channel used commonly by communication devices 10 of which quantity is smaller would cause a smaller interference degree, and accordingly the channel selector 13 sets a priority order such that a channel used by communication devices 10 of which quantity is smaller is given a higher priority level. That is, in the example of FIG. 7, a priority order of channels to be selected becomes "3", "4", "2" and "1".

As described in the aforementioned operation examples, selecting a channel commonly used by wireless terminals 32 corresponding to adjacent secondary stations 31 may be permitted depending on an interference degree. In a case where selecting a channel commonly used by wireless terminals 32 corresponding to adjacent secondary stations 31 is permitted, it is desirable that a condition that a channel commonly used by wireless terminals 32 corresponding to adjacent secondary stations 31 be selected preferentially be added to a condition that the channel selector 13 select a channel. If this condition is more preferentially applied to the channel selector 13 than the condition that a free channel be selected, it is possible to increase a quantity of communication devices 10 with respect to types of channels. In other words, it is possible to quickly select a channel capable of suppressing interference while limiting kinds of channels to be used.

For example, as shown in FIG. 3B, in a case where a free channel has a higher priority level, the wireless terminal 32 of "a" corresponding to the secondary station 31 of "A" tries to use the channel "5" for communication with a corresponding apparatus 40. In contrast if the channel selector 13 uses the condition that a channel commonly used by wireless terminals 32 corresponding to adjacent secondary stations 31 be selected more preferentially than other conditions, not the channel "5" but any of the channels "2" to "4" is used preferentially. Therefore, the channel selector 13 secures the channel "5" for a free channel. This channel can be used for any other communication devices 10, and used as a reserve when a communication quality is degraded by using another channel.

### (EMBODIMENT 2)

In a communication device 10 in accordance with the present embodiment, a channel administrator 14 may have a blacklist and a whitelist. Each element of the blacklist has information on, identity contained in a packet received by a corresponding second wireless transceiver 12 and transmitted between any other communication device 10 and an apparatus 40 corresponding thereto, and a channel for transmission of the packet. Each element of the whitelist has information on, identity of any other communication device 10, excluded from the blacklist, of any other communication devices 10 communicating through a corresponding first wireless transceiver 11, and a channel used for the communication device 10 communicating with an apparatus 40 corresponding thereto.

In the configuration, a channel selector 13 is configured to set a priority order of channels to be selected which are available, based on a condition that each channel registered on the whitelist be given a higher priority level than each channel registered on the blacklist.

The channel selector 13 may be configured, when a channel is registered on the whitelist and used for any other communication device(s) 10, to use a condition that the channel be given higher priority level. In this case, the condition used by the channel selector 13 is set such that the channel is given a higher priority level than channels, which are not used by any other communication device 10, of channels registered on the whitelist.

The channel selector 13 may be configured, when all channels which are available are registered on the blacklist, to use a condition that a channel having a smaller quantity of any other communication devices 10 each of which identity information is registered on the blacklist be given a higher priority level.

As explained in embodiment 1, the channel selector 13 can select a channel used for a wireless terminal(s) 32 corresponding to an adjacent secondary station(s) 31 communicating with an apparatus 10 corresponding thereto. The channel selector 13 of embodiment 1 employs the selection reference for evaluating an interference degree per channel. That is, the channel selector 13 does not judge which of any other communication devices 10 causes interference.

The channel selector 13 of the present embodiment judges per adjacent communication device 10 whether or not an adjacent communication device 10 causes interference. The channel selector 13 sets an interference flag to each communication device 10 judged to cause interference, and sets a non-interference flag to each communication device 10 judged not to cause interference. If two or more adjacent communication devices 10 exist, a list (not shown) of communication devices 10 to which interference flags are each set, and a list (not shown) of communication devices 10 to which non-interference flags are each set are made. The former is called the blacklist and the latter is called the whitelist.

Each packet transmitted between a wireless terminal 32 and an apparatus 40 which communicate with each other contains information on identity of the wireless terminal 32 or information on identity of a secondary station 31 to which the wireless terminal 32 belongs. If a communication protocol is standardized among wireless terminals 32, each wireless terminal 32 can extract information from a packet causing interference. In consideration of this, a wireless terminal 32 detecting interference extracts information on identity of a secondary station 31 or a wireless terminal 32 from a packet causing interference to transmit it to the secondary station 31.

The channel administrator 14 first sets non-interference flags to adjacent communication devices 10 so as to be registered on the whitelist. When interference is detected, the channel administrator sets an interference flag to register it on the blacklist. If interference with a communication device 10 registered on the blacklist is not detected continuously for a prescribed time, the communication device 10 is again registered on the whitelist. The prescribed time may be a time during which the aforementioned penalty can be charged. In the operation, each of adjacent communication devices 10 is registered on either the whitelist or the blacklist, and is sure to be registered on any one of the whitelist or the blacklist.

The channel selector 13 of the communication device 10 uses a selection standard that a channel identical to that of a communication device 10 registered on the whitelist be selected preferentially. That is, the channel selector 13 gives a higher priority level to a channel(s), used by any other communication device(s) 10, of channels registered on the whitelist than a channel(s), not used by any other communication device 10, of the channels registered on the whitelist. An operational example is explained but it is assumed that channels used by wireless terminals 32 corresponding to adjacent secondary stations 31 are in a status shown in FIG. 3A.

When every adjacent communication station 10 is registered on the whitelist, the channel selector 13 selects a channel in a priority order of "2", "3", "4" and "1". The channel selector 13 first selects the channel "2". In an example, the channel administrator 14 detects a packet transmitted between the wireless terminal 32 of "b" corresponding to the secondary station 31 of "B" and an apparatus 40 corresponding thereto, but does not detect a packet transmitted between the wireless terminal 32 of "e" corresponding to the secondary station 31 of "E" and an apparatus 40 corresponding thereto. In this example, the secondary station 31 of "B" of two secondary stations 31 of "B" and "E" using the channel "2" is registered on the blacklist. Accordingly, the channel selector 13 decreases the priority level of the channel "2". That is, the channel selector 13 changes the selection order of channels to "3", "4", "2" and "1".

The channel selector 13 then selects the channel "3". In an example, the channel administrator 14 detects a packet transmitted between the wireless terminal 32 of "d" corresponding to the secondary station 31 of "D" and an apparatus 40 corresponding thereto. In this example, the channel administrator 14 registers the secondary station 31 of "D" on the blacklist, and the channel selector 13 is to change a channel in use. If the channel used by the wireless terminal 32 of "b" corresponding to the secondary station 31 of "B" and the apparatus 40 corresponding thereto is then changed from the channel "2" to the channel "3", the channel "2" is registered on the whitelist.

The channel selector 13 is therefore to use the priority order of "2", "4", "3" and "1" at this moment. That is, the channel "2" is selected finally. However, if the channel for the secondary station 31 of "B" is not changed, the channel "4" is selected. In addition, if all channels which are available are registered on the blacklist, the channel selector 13 preferentially selects a channel used by a minimum quantity of secondary stations 31 registered on the blacklist.

In the embodiment, a channel identical to that of an adjacent communication device(s) 10 can be used by using the blacklist and the whitelist for administrating the presence or absence of interference per secondary station 31 (communication device 10). As explained in embodiment 1, the channel selector 13 can set, as a channel selection condition, a condition that a channel identical to that of an adjacent communication device(s) 10 be more preferentially used than the condition that a free channel be selected. By selecting a channel based on the condition, the types of channels to be allocated for communication devices 10 can be more decreased than a case where only free channels are used.

It is also possible to predict channels having few interference through study by repeatedly renewing contents of the blacklist and the whitelist. The other configuration and operations are similar to those of embodiment 1.

### (EMBODIMENT 3)

In a communication device 10 of the present embodiment, a channel administrator 14 may be configured to extract and store information on a channel(s) used by any other communication device(s) 10 communicating by one-hop as well as information on a channel(s) used by still any other communication device(s) 10 communicating by two-hop.

A first wireless transceiver 11 is configured to transmit a packet containing information on a channel selected by a channel selector 13 as well as information on a channel(s) used by any other communication device(s) 10 communicating by one-hop for communication with an apparatus(es) corresponding thereto, of a set of information on channels stored in the channel administrator 14.

The channel administrator 14 is configured, from a packet received by the first wireless transceiver 11, to extract and store information on a channel(s) used by any other communication device(s) 10 communicating by one-hop for communication with an apparatus(es) 40 corresponding thereto. The channel administrator 14 is further configured, from a packet received by the first wireless transceiver 11, to extract and store information on a channel(s) used by any other communication device(s) 10 communicating by two-hop for communication with an apparatus(es) 40 corresponding thereto.

A channel selector 13 is configured to set a priority order of channels to be selected which are available, based on a condition that a channel(s) used by any other communication device(s) 10 communicating by two-hop be given a higher priority level than a channel(s) used by any other communication device(s) 10 communicating by one-hop.

In a configuration of embodiment 1 or 2, a channel administrator 14 thereof administrates information on a channel used for a second wireless transceiver 12 only with respect to an adjacent communication device(s) 10. On the other hand, the present embodiment exemplifies channel information administration with respect to a communication device(s) 10 having a secondary station(s) 31 within a two-hop range. As an example, available channels are tens channels of "1" to "10". Channels used for adjacent communication devices 10 are the same as those of embodiment 1, and the channel administrator 14 stores a set of information shown in FIG. 3A. The set of information shown in FIG. 3A is extracted from hello packets by the channel administrator 14.

In embodiment 1, information on a channel used for a communication with an apparatus 40 is contained in a hello packet, whereas in the present embodiment information on a channel(s) used for an adjacent communication device(es) 10 communicating with an apparatus(es) 40 corresponding thereto are contained in a hello packet. That is, a hello packet received by a secondary station 31 from an adjacent secondary station 31 contains information on a channel(s) used by adjacent communication station(s) 10 for communication with an apparatus(es) 40 corresponding thereto and information on a channel(s) used by a communication station(s) 10 existing two-hop apart for communication with an apparatus(es) 40 corresponding thereto.

The channel administrator 14 therefore extracts, from hello packets, information on channels used between wireless terminals 32 of "b" to "k" and respective apparatus 40 for each of the secondary station 31 of "b" to "k" within two-hop. As shown in FIG. 8A, the channel administrator 14 stores a set of information on channels extracted from the hello packets. In FIG. 8A, HOP Q'TY is the number of hops the secondary station 31 of "A" communicates with any other secondary stations 31.

The channel selector 13 uses, as a condition having a higher priority than the condition employed in embodiment 1, an additional condition that a channel, which is a channel not used for any adjacent communication device 10 communicating with an apparatus 40 corresponding thereto, used by a communication device 10 requiring 2-hop for communication be selected. That is, the condition that the channel selector 13 selects a channel for communicating with a corresponding apparatus 40 is defined, as follows:
(1) selecting a channel which is used by a communication device 10 requiring 2-hop but not used by any adjacent communication device 10 for communication with an apparatus 40 corresponding thereto;
(2) selecting a free channel;
(3) selecting from a channel used by an adjacent communication device 10 for communication with an apparatus corresponding thereto; and
(4) selecting a channel used for a first wireless network NT1.

Regarding these conditions, the conditions (2) to (4) are the same as the conditions (1) to (3) explained in embodiment 1. By the new additional condition (1), channel allocation can be performed without using a free channel. If channels used by communication devices 10 within two-hop for communication with respective apparatuses 40 are in a status shown in FIG. 8A, a list of channel usage status is shown in FIG. 8B. The channel selector 13 corresponding to the secondary station 31 of "A" is to select a channel based on the priority order of "5", "6", "7", "8", "9", "10", "2", "3", "4" and "1" in accordance with the aforementioned conditions.

Other configuration and operations are similar to those of embodiment 1 or 2. The embodiment can be therefore combined with a configuration of embodiment 1 or 2. That is, embodiment 1 or 2 is explained by using a relation with secondary stations 31 communicating by one-hop, but may perform a similar process using a relation with secondary stations 31 communicating by two-hop. In this case, a priority level of channels used by communication devices 10 each of which includes a secondary station 31 communicating by two-hop is more increased than a priority level of channels used by communication devices 10 each of which includes a secondary station 31 communicating by one-hop. Therefore, channel selection by a process of embodiment 1 may be used when a priority order is set by classification per hop quantity.

The channel quantities and various numerical values in the operational examples of the above embodiments are just values exemplified for explanation and each embodiment is not limited to those.

## Claims

1. A wireless network type of communication device (10), comprising:
a first wireless transceiver (11) configured to communicate with a primary station (20) via a first wireless network (NT1) that is an ad hoc network;
a second wireless transceiver (12) configured to communicate with an apparatus (40) via a second wireless network (NT2);
a channel selector (13) configured to select a channel to be used for the second wireless transceiver (12) from a plurality of channels; and
a channel administrator (14) configured to obtain, through the first wireless transceiver (11), a channel that is used by another communication device for communicating with another apparatus, wherein
the first wireless transceiver (11) is configured to transmit a packet containing information on the channel selected by the channel selector (13),
the channel administrator (14) is configured, from a packet received by the first wireless transceiver (11), to extract and store information on the channel used by another communication device for communicating with another apparatus and
the channel selector (13) is configured:
to set a condition based on a set of information on channels stored in the channel administrator (14) as well as respective interchannel interference;
to set, based on the condition, a priority order of two or more channels to be selected which are available; and then
to select the channel in the priority order, thereby selecting the channel to be used for the second wireless transceiver (12);
**characterized in that**
the channel selector (13) is configured:
to determine a priority level per channel to set the priority order of two or more channels to be selected;
to judge in order from a channel having a higher priority level whether or not it is available while if it is judged to be unavailable, judging whether or not a channel having a next higher priority level is available;
to select the channel judged to be available at first as the channel to be used for the second wireless transceiver (12);
the first wireless transceiver (11) is configured to transmit a packet containing information on the channel selected by the channel selector (13) as well as information, on the channel that is used for communication by another communication device for communicating by one-hop with another apparatus, of the set of information on the channels stored in the channel administrator (14),
the channel administrator (14) is configured, from the packet received by the first wireless transceiver (11), to extract and store information on the channel that is used by another communication device for communicating by one-hop with another apparatus as well as information on a channel that is used for communication by still another communication device for communicating by two-hop with another apparatus,
the channel selector (13) is configured to set the priority order of channels to be selected which are available, based on the condition that the channel used by the communication device communicating by two-hop be given a higher priority level than the channel used by the communication device communicating by one-hop.

2. The wireless network type of communication device (10) of claim 1, wherein the channel selector (13) is configured to decrease a priority level of a channel judged to be unavailable until a prescribed time elapses from a point in time when the channel is judged to be unavailable.

3. The wireless network type of communication device (10) of claim 1 or 2,
wherein
the first wireless transceiver (11) has a function for transmitting a packet containing an interference degree representing a rate of interference received from at least one of any other apparatus and any other communication device during communication with a corresponding apparatus (40),
the channel administrator (14) is configured, from the packet received by the first wireless transceiver (11), to extract and store per channel an interference degree by as well as information on the channel that is used by another communication device for communicating with another apparatus, and
the channel selector (13) is configured, when selecting a channel identical to that of any other communication device as the channel to be used for the second wireless transceiver (12), to set the priority order of channels to be selected which are available, based on the condition that a channel having a lower interference degree be given a higher priority level.

4. The wireless network type of communication device (10) of claim 1 or 2,
wherein
the first wireless transceiver (11) has a function for transmitting a packet containing an interference degree representing a rate of interference received from at least one of any other apparatus and any other communication device during communication with a corresponding apparatus (40),
the channel administrator (14) is configured, from the packet received by the first wireless transceiver (11), to extract and store per channel an interference degree by as well as information on the channel that is used by another communication device for communicating with another apparatus, and
the channel selector (13) is configured, when selecting a channel identical to that of any other communication device as the channel to be used for the second wireless transceiver (12), to calculate a total of interference degrees per channel and to set the priority order of channels to be selected which are available, based on the condition that a channel having a smaller total of interference degrees be given a higher priority level.

5. The wireless network type of communication device (10) of claim 3 or 4, wherein the first wireless transceiver (11) is configured to transmit the packet containing the interference degree only in a case where the interference degree exceeds a specified reference degree.

6. The wireless network type of communication device (10) of claim 1 or 2,
wherein
the channel administrator (14) is configured to store a received signal strength when the first wireless transceiver (11) receives a packet from another communication device communicating with another apparatus, the received signal strength being associated with a channel used for said any other communication device communicating with the apparatus, and
the channel selector (13) is configured, when selecting a channel identical to that of any other communication device as the channel to be used for the second wireless transceiver (12), to set the priority order of channels to be selected which are available, based on the condition that a channel having a smaller received signal strength be given a higher priority level.

7. The wireless network type of communication device (10) of claim 1 or 2,
wherein
the channel administrator (14) is configured to find, per channel which is available, a quantity of any other communication devices each of which uses a channel for the second wireless transceiver (12), and
the channel selector (14) is configured to set the priority order of channels to be selected which are available, based on the condition that a channel having a smaller quantity found by the channel administrator (14) be given a higher priority level.

8. The wireless network type of communication device (10) of claim 1
wherein
the channel administrator (14) has
a blacklist, each element of which has information on, identity contained in a packet when the packet transmitted between another communication device and another apparatus is received by the second wireless transceiver (12), and the channel for transmission of the packet, and
a whitelist, each element of which has information on, identity of any other communication device, excluded from the blacklist, of any other communication devices each of which communicates through the first wireless transceiver (11), and said channel that is used by the communication device to communicate with said other apparatus, and
the channel selector (13) is configured to set the priority order of channels to be selected which are available, based on the condition that each channel registered on the whitelist be given a higher priority level than each channel registered on the blacklist.

9. The wireless network type of communication device (10) of claim 8, wherein the channel selector (13) is configured, when a channel is registered on the whitelist and used for any other communication device, to set the priority order of channels to be selected which are available, based on the condition that the channel be given a higher priority level than each channel, not used for any other communication device, of channels registered on the whitelist.

10. The wireless network type of communication device (10) of claim 8, wherein the channel selector (13) is configured, when all channels which are available are registered on the blacklist, to set the priority order of channels to be selected which are available, based on the condition that a channel having a smaller quantity of any other communication devices each of which information on identity is registered on the blacklist be given a higher priority level.

11. The wireless network type of communication device (10) of any one of claims 1 to 10, wherein
the first wireless transceiver (11) has a function for transmitting meter reading data by a meter installed in a consumer facility to the primary station (20) and a function for receiving an instruction from the primary station (20), and
the second wireless transceiver (12) is configured to communicate with the apparatus (40) in the consumer facility.

## Patentansprüche

1. Drahtlose Netzwerkkommunikationsvorrichtung (10), aufweisend:
einen ersten drahtlosen Sendeempfänger (11), der dazu eingerichtet ist, mit einer primären Station (20) über ein erstes drahtloses Netzwerk (NT1) zu kommunizieren, das ein Ad-hoc-Netzwerk ist;
einen zweiten drahtlosen Sendeempfänger (12), der dazu eingerichtet ist, mit einer Vorrichtung (40) über ein zweites drahtloses Netzwerk (NT2) zu kommunizieren;
einen Kanalwähler (13), der dazu eingerichtet ist, aus einer Anzahl von Kanälen einen Kanal auszuwählen, der für den zweiten drahtlosen Sendeempfänger (12) zu verwenden ist; und
einen Kanaladministrator (14), der dazu eingerichtet ist, mittels des ersten drahtlosen Sendeempfängers (11) einen Kanal zu ermitteln, der durch eine weitere Kommunikationsvorrichtung genutzt wird, um mit einer weiteren Vorrichtung zu kommunizieren, wobei
der erste drahtlose Sendeempfänger (11) dazu eingerichtet ist, ein Datenpaket zu übertragen, das Informationen über den Kanal enthält, der durch den Kanalwähler (13) ausgewählt ist,
der Kanaladministrator (14) dazu eingerichtet ist, aus einem Datenpaket, das durch den ersten drahtlosen Sendeempfänger (11) empfangen ist, Informationen über den Kanal zu extrahieren und zu speichern, der durch eine weitere Kommunikationsvorrichtung genutzt wird, um mit einer weiteren Vorrichtung zu kommunizieren, und
der Kanalwähler (13) dazu eingerichtet ist:
eine Bedingung auf der Grundlage eines Satzes von in dem Kanaladministrator (14) gespeicherten Informationen über Kanäle sowie auf der Grundlage entsprechender Interferenzen zwischen Kanälen einzustellen;
auf der Grundlage der Bedingung eine Prioritäts-Reihenfolge von zwei oder mehreren auszuwählenden Kanälen, die verfügbar sind, einzustellen; und anschließend
den Kanal gemäß der Prioritäts-Reihenfolge auszuwählen, so dass dadurch der Kanal ausgewählt wird, der für den zweiten drahtlosen Sendeempfänger (12) zu verwenden ist;
**dadurch gekennzeichnet, dass**
der Kanalwähler (13) dazu eingerichtet ist:
einen Prioritätslevel pro Kanal zu bestimmen, um die Priorität von zwei oder mehreren auszuwählenden Kanälen einzustellen;
gemäß der Reihenfolge ausgehend von einem Kanal, der einen höheren Prioritätslevel aufweist, zu beurteilen, ob dieser verfügbar ist oder ob nicht, während, falls er als nicht verfügbar beurteilt wird, zu beurteilen, ob ein Kanal, der einen nächst höheren Prioritätslevel aufweist, verfügbar ist oder ob nicht;
den Kanal, der zuerst als verfügbar beurteilt ist, als den Kanal auszuwählen, der für den zweiten drahtlosen Sendeempfänger (12) zu verwenden ist;
der erste drahtlose Sendeempfänger (11) dazu eingerichtet ist, von dem Satz von Informationen über die Kanäle, die in dem Kanaladministrator (14) gespeichert sind, ein Datenpaket zu übertragen, das Informationen über den Kanal, der durch den Kanalwähler (13) ausgewählt ist, sowie Informationen über den Kanal enthält, der durch eine weitere Kommunikationsvorrichtung zur Kommunikation genutzt wird, um in einem Schritt mit einer weiteren Vorrichtung zu kommunizieren,
der Kanaladministrator (14) dazu eingerichtet ist, aus dem Datenpaket, das mittels des ersten drahtlosen Sendeempfängers (11) empfangen ist, Informationen über den Kanal, der durch eine weitere Kommunikationsvorrichtung genutzt wird, um in einem Schritt mit einer weiteren Vorrichtung zu kommunizieren, sowie Daten über einen Kanal zu extrahieren und zu speichern, der zur Kommunikation von noch einer weiterer Kommunikationsvorrichtung genutzt wird, um in zwei Schritten mit einer weiteren Vorrichtung zu kommunizieren,
der Kanalwähler (13) dazu eingerichtet ist, die Prioritäts-Reihenfolge auszuwählender Kanäle, die verfügbar sind, auf der Grundlage der Bedingung einzustellen, dass dem Kanal, der durch die Kommunikationsvorrichtung genutzt wird, die in zwei Schritten kommuniziert, ein höherer Prioritätslevel zu verleihen ist, als dem Kanal, der durch die Kommunikationsvorrichtung genutzt wird, die in einem Schritt kommuniziert.

2. Drahtlose Netzwerkkommunikationsvorrichtung (10) nach Anspruch 1, wobei der Kanalwähler (13) dazu eingerichtet ist, einen Rangfolgegrad eines Kanals zu verringern, der als nicht verfügbar beurteilt ist, bis eine vorbestimmte Zeit seit einem Zeitpunkt verstrichen ist, in dem der Kanal als nicht verfügbar beurteilt ist.

3. Drahtlose Netzwerkkommunikationsvorrichtung (10) nach Anspruch 1 oder 2, wobei
der erste drahtlose Sendeempfänger (11) eine Funktion zum Senden eines Datenpakets aufweist, das einen Interferenzgrad enthält, der eine Interferenzrate repräsentiert, die von mindestens einer von einer beliebigen sonstigen Vorrichtungen und einer beliebigen sonstigen Kommunikationsvorrichtung her während einer Kommunikation mit einer entsprechenden Vorrichtung (40) empfangen wird,
der Kanaladministrator (14) dazu eingerichtet ist, aus dem Datenpaket, das durch den ersten drahtlosen Sendeempfänger (11) empfangen ist, für jeden Kanal einen Interferenzgrad durch sowie Informationen über den Kanal zu extrahieren und zu speichern, der von einer weiteren Kommunikationsvorrichtung genutzt wird, um mit einer weiteren Vorrichtung zu kommunizieren, und
der Kanalwähler (13) dazu eingerichtet ist, wenn er einen Kanal, der mit demjenigen einer beliebigen sonstigen Kommunikationsvorrichtung identisch ist, als den Kanal auswählt, der für den zweiten drahtlosen Sendeempfänger (12) zu verwenden ist, die Prioritäts-Reihenfolge der auszuwählenden Kanäle, die verfügbar sind, auf der Grundlage der Bedingung einzustellen, dass einem Kanal, der einen geringeren Interferenzgrad aufweist, ein höherer Prioritätslevel zu verleihen ist.

4. Drahtlose Netzwerkkommunikationsvorrichtung (10) nach Anspruch 1 oder 2, wobei
der erste drahtlose Sendeempfänger (11) eine Funktion aufweist, um ein Datenpaket zu senden, das einen Interferenzgrad enthält, der eine Interferenzrate kennzeichnet, die von mindestens einer von einer beliebigen sonstigen Vorrichtung und einer beliebigen sonstigen Kommunikationsvorrichtung her während einer Kommunikation mit einer entsprechenden Vorrichtung (40) empfangen wird,
der Kanaladministrator (14) dazu eingerichtet ist, aus dem Datenpaket, das durch den ersten drahtlosen Sendeempfänger (11) empfangen ist, pro Kanal einen Interferenzgrad durch sowie Informationen über den Kanal zu extrahieren und zu speichern, der durch eine weitere Kommunikationsvorrichtung genutzt wird, um mit einer weiteren Vorrichtung zu kommunizieren, und
der Kanalwähler (13) dazu eingerichtet ist, wenn ein Kanal, der mit demjenigen einer beliebigen sonstigen Kommunikationsvorrichtung identisch ist, als der Kanal ausgewählt wird, der für den zweiten drahtlosen Sendeempfänger (12) zu verwenden ist, einen Gesamtbetrag von Interferenzgraden pro Kanal zu berechnen, und die Prioritäts-Reihenfolge auszuwählender Kanäle, die verfügbar sind, auf der Grundlage der Bedingung einzustellen, dass einem Kanal, der einen kleineren Gesamtbetrag von Interferenzgraden aufweist, ein höherer Prioritätslevel zu verleihen ist.

5. Drahtlose Netzwerkkommunikationsvorrichtung (10) nach Anspruch 3 oder 4, wobei der erste drahtlose Sendeempfänger (11) dazu eingerichtet ist, das Datenpaket, das den Interferenzgrad enthält, lediglich in einem Fall zu senden, in dem der Interferenzgrad einen spezifizierten Referenzgrad überschreitet.

6. Drahtlose Netzwerkkommunikationsvorrichtung (10) nach Anspruch 1 oder 2, wobei
der Kanaladministrator (14) dazu eingerichtet ist, eine empfangene Signalfeldstärke zu speichern, wenn der erste drahtlose Sendeempfänger (11) ein Datenpaket von einer weiteren Kommunikationsvorrichtung empfängt, die mit einer weiteren Vorrichtung kommuniziert, wobei die empfangene Signalfeldstärke einem Kanal zugeordnet wird, der für die besagte beliebige sonstige Kommunikationsvorrichtung genutzt wird, die mit der Vorrichtung kommuniziert, und
der Kanalwähler (13) dazu eingerichtet ist, wenn ein Kanal, der mit demjenigen einer beliebigen sonstigen Kommunikationsvorrichtung identisch ist, als der Kanal ausgewählt wird, der für den zweiten drahtlosen Sendeempfänger (12) zu verwenden ist, die Prioritäts-Reihenfolge auszuwählender Kanäle, die verfügbar sind, auf der Grundlage der Bedingung einzustellen, dass einem Kanal, der eine kleinere empfangene Signalfeldstärke aufweist, ein höherer Prioritätslevel zu verleihen ist.

7. Drahtlose Netzwerkkommunikationsvorrichtung (10) nach Anspruch 1 oder 2, wobei
der Kanaladministrator (14) dazu eingerichtet ist, pro Kanal, der verfügbar ist, eine Menge beliebiger sonstiger Kommunikationsvorrichtungen zu ermitteln, von denen jede einen Kanal für den zweiten drahtlosen Sendeempfänger (12) nutzt, und
der Kanalwähler (14) dazu eingerichtet ist, die Prioritäts-Reihenfolge auszuwählender Kanäle, die verfügbar sind, auf der Grundlage der Bedingung einzustellen, dass einem Kanal mit einer kleineren Menge, die durch den Kanaladministrator (14) ermittelt ist, ein höherer Prioritätslevel zu verleihen ist.

8. Drahtlose Netzwerkkommunikationsvorrichtung (10) nach Anspruch 1, wobei
der Kanaladministrator (14) aufweist:
eine schwarze Liste, in der jedes Element Informationen über eine Identität, die in einem Datenpaket enthalten ist, wenn das Datenpaket, das zwischen einer weiteren Kommunikationsvorrichtung und einer weiteren Vorrichtung übertragen wird, durch den zweiten drahtlosen Sendeempfänger (12) empfangen wird, und über den Kanal zur Übertragung des Datenpakets aufweist, und
eine weiße Liste, in der jedes Element Informationen über eine Identität einer beliebigen sonstigen Kommunikationsvorrichtung, die von der schwarze Liste ausgeschlossen ist, beliebiger sonstiger Kommunikationsvorrichtungen, von denen jede über den ersten drahtlosen Sendeempfänger (11) kommuniziert, und über den Kanal aufweist, der durch die Kommunikationsvorrichtung genutzt wird, um mit der weiteren Vorrichtung zu kommunizieren, und
der Kanalwähler (13) dazu eingerichtet ist, die Prioritäts-Reihenfolge auszuwählender Kanäle, die verfügbar sind, auf der Grundlage der Bedingung einzustellen, dass jedem Kanal, der in der weißen Liste eingetragen ist, ein höherer Prioritätslevel zu verleihen ist als jedem Kanal, der in der schwarzen Liste eingetragen ist.

9. Drahtlose Netzwerkkommunikationsvorrichtung (10) nach Anspruch 8, wobei der Kanalwähler (13) dazu eingerichtet ist, wenn ein Kanal in der weißen Liste eingetragen ist und für eine beliebige weitere Kommunikationsvorrichtung genutzt wird, die Prioritäts-Reihenfolge auszuwählender Kanäle, die verfügbar sind, auf der Grundlage der Bedingung einzustellen, dass dem Kanal ein höherer Prioritätslevel zu verleihen ist als jedem Kanal von Kanälen, die in der weißen Liste eingetragen sind, der nicht für eine beliebige weitere Kommunikationsvorrichtung genutzt wird.

10. Drahtlose Netzwerkkommunikationsvorrichtung (10) nach Anspruch 8, wobei der Kanalwähler (13) dazu eingerichtet ist, wenn alle Kanäle, die verfügbar sind, in der schwarzen Liste eingetragen sind, die Prioritäts-Reihenfolge auszuwählender Kanäle, die verfügbar sind, auf der Grundlage der Bedingung einzustellen, dass einem Kanal mit einer kleinere Menge beliebiger sonstiger Kommunikationsvorrichtungen, deren jeweilige Identitätsinformationen in der schwarzen Liste eingetragen sind, ein höherer Prioritätslevel zu verleihen ist.

11. Drahtlose Netzwerkkommunikationsvorrichtung (10) nach einem beliebigen der Ansprüche 1 bis 10, wobei
der erste drahtlose Sendeempfänger (11) eine Funktion zum Übertragen von Ablesedaten mittels einer Messvorrichtung, die in einer Verbrauchereinrichtung eingebaut ist, zu der primären Station (20) und eine Funktion zum Empfangen eines Befehls von der primären Station (20) aufweist, und
der zweite drahtlose Sendeempfänger (12) dazu eingerichtet ist, mit der Vorrichtung (40) in der Verbrauchereinrichtung zu kommunizieren.

## Revendications

1. Dispositif de communication (10) de type utilisé dans un réseau sans fil, comprenant :
un premier émetteur-récepteur sans fil (11) configuré de manière à communiquer avec une station principale (20) par le biais d'un premier réseau sans fil (NT1) qui est un réseau *ad hoc ;*
un second émetteur-récepteur sans fil (12) configuré de manière à communiquer avec un appareil (40) par le biais d'un second réseau sans fil (NT2) ;
un sélecteur de canal (13) configuré de manière à sélectionner un canal à utiliser pour le second émetteur-récepteur sans fil (12), parmi une pluralité de canaux ; et
un administrateur de canal (14) configuré de manière à obtenir, par le biais du premier émetteur-récepteur sans fil (11), un canal qui est utilisé par un autre dispositif de communication en vue de communiquer avec un autre appareil ; dans lequel :
le premier émetteur-récepteur sans fil (11) est configuré de manière à transmettre un paquet contenant des informations sur le canal sélectionné par le sélecteur de canal (13) ;
l'administrateur de canal (14) est configuré de manière à, à partir d'un paquet reçu par le premier émetteur-récepteur sans fil (11), extraire et stocker des informations sur le canal utilisé par un autre dispositif de communication en vue de communiquer avec un autre appareil ; et
le sélecteur de canal (13) est configuré de manière à :
définir une condition sur la base d'un ensemble d'informations sur des canaux stockées dans l'administrateur de canal (14), ainsi que d'un brouillage entre canaux respectif ;
définir, sur la base de la condition, un ordre de priorité de deux canaux ou plus à sélectionner, lesquels sont disponibles ; et ensuite
sélectionner le canal selon l'ordre de priorité, et par conséquent sélectionner le
canal à utiliser pour le second émetteur-récepteur sans fil (12) ;
**caractérisé en ce que** :
le sélecteur de canal (13) est configuré de manière à :
déterminer un niveau de priorité par canal en vue de définir l'ordre de priorité de deux canaux ou plus à sélectionner ;
déterminer, selon l'ordre, depuis un canal présentant un niveau de priorité supérieur, s'il est disponible ou non, et s'il est déterminé comme indisponible, déterminer si un canal présentant un niveau de priorité supérieur successif est disponible ou non ;
sélectionner le canal déterminé comme disponible en premier lieu en tant que le canal à utiliser pour le second émetteur-récepteur sans fil (12) ;
le premier émetteur-récepteur sans fil (11) est configuré de manière à transmettre un paquet contenant des informations sur le canal sélectionné par le sélecteur de canal (13) ainsi que des informations sur le canal qui est utilisé pour la communication par un autre dispositif de communication en vue de communiquer en un seul saut avec un autre appareil, de l'ensemble d'informations sur les canaux stockées dans l'administrateur de canal (14) ;
l'administrateur de canal (14) est configuré de manière à, à partir du paquet reçu par le premier émetteur-récepteur sans fil (11), extraire et stocker des informations sur le canal qui est utilisé par un autre dispositif de communication en vue de communiquer en un seul saut avec un autre appareil, ainsi que des informations sur un canal qui est utilisé pour la communication par encore un autre dispositif de communication en vue de communiquer en deux sauts avec un autre appareil ;
le sélecteur de canal (13) est configuré de manière à définir l'ordre de priorité de canaux à sélectionner qui sont disponibles, sur la base de la condition selon laquelle le canal utilisé par le dispositif de communication communiquant en deux sauts se voit affecter un niveau de priorité supérieur à celui du canal utilisé par le dispositif de communication communiquant en un seul saut.

2. Dispositif de communication (10) de type utilisé dans un réseau sans fil selon la revendication 1, dans lequel le sélecteur de canal (13) est configuré de manière à diminuer un niveau de priorité d'un canal déterminé comme indisponible jusqu'à ce qu'un temps prescrit s'écoule à partir d'un point dans le temps où le canal est déterminé comme indisponible.

3. Dispositif de communication (10) de type utilisé dans un réseau sans fil selon la revendication 1 ou 2, dans lequel :
le premier émetteur-récepteur sans fil (11) présente une fonction pour transmettre un paquet contenant un degré de brouillage représentant un taux de brouillage reçu en provenance d'au moins l'un parmi un quelconque autre appareil et un quelconque autre dispositif de communication au cours de la communication avec un appareil correspondant (40) ;
l'administrateur de canal (14) est configuré de manière à, à partir du paquet reçu par le premier émetteur-récepteur sans fil (11), extraire et stocker, par canal, un degré de brouillage par le canal, ainsi que des informations sur le canal qui est utilisé par un autre dispositif de communication en vue de communiquer avec un autre appareil ; et
le sélecteur de canal (13) est configuré de manière à, lors de la sélection d'un canal identique à celui d'un quelconque autre dispositif de communication en tant que le canal à utiliser pour le second émetteur-récepteur sans fil (12), définir l'ordre de priorité de canaux à sélectionner qui sont disponibles, sur la base de la condition selon laquelle un canal présentant un degré de brouillage inférieur se voit affecter un niveau de priorité supérieur.

4. Dispositif de communication (10) de type utilisé dans un réseau sans fil selon la revendication 1 ou 2, dans lequel :
le premier émetteur-récepteur sans fil (11) présente une fonction pour transmettre un paquet contenant un degré de brouillage représentant un taux de brouillage reçu en provenance d'au moins l'un parmi un quelconque autre appareil et un quelconque autre dispositif de communication au cours de la communication avec un appareil correspondant (40) ;
l'administrateur de canal (14) est configuré de manière à, à partir du paquet reçu par le premier émetteur-récepteur sans fil (11), extraire et stocker, par canal, un degré de brouillage par le canal, ainsi que des informations sur le canal qui est utilisé par un autre dispositif de communication en vue de communiquer avec un autre appareil ; et
le sélecteur de canal (13) est configuré de manière à, lors de la sélection d'un canal identique à celui d'un quelconque autre dispositif de communication en tant que le canal à utiliser pour le second émetteur-récepteur sans fil (12), calculer un total de degrés de brouillage par canal, et définir l'ordre de priorité de canaux à sélectionner qui sont disponibles, sur la base de la condition selon laquelle un canal présentant un total de degrés de brouillage plus faible se voit affecter un niveau de priorité supérieur.

5. Dispositif de communication (10) de type utilisé dans un réseau sans fil selon la revendication 3 ou 4, dans lequel le premier émetteur-récepteur sans fil (11) est configuré de manière à transmettre le paquet contenant le degré de brouillage uniquement dans un cas où le degré de brouillage est supérieur à un degré de référence spécifié.

6. Dispositif de communication (10) de type utilisé dans un réseau sans fil selon la revendication 1 ou 2, dans lequel :
l'administrateur de canal (14) est configuré de manière à stocker une intensité de signal reçu lorsque le premier émetteur-récepteur sans fil (11) reçoit un paquet en provenance d'un autre dispositif de communication communiquant avec un autre appareil, l'intensité de signal reçu étant associée à un canal utilisé pour ledit quelconque autre dispositif de communication communiquant avec l'appareil ; et
le sélecteur de canal (13) est configuré de manière à, lors de la sélection d'un canal identique à celui d'un quelconque autre dispositif de communication en tant que le canal à utiliser pour le second émetteur-récepteur sans fil (12), définir l'ordre de priorité de canaux à sélectionner qui sont disponibles, sur la base de la condition selon laquelle un canal présentant une intensité de signal reçu plus faible se voit affecter un niveau de priorité supérieur.

7. Dispositif de communication (10) de type utilisé dans un réseau sans fil selon la revendication 1 ou 2, dans lequel :
l'administrateur de canal (14) est configuré de manière à rechercher, pour chaque canal disponible, une quantité de quelconques autres dispositifs de communication qui utilisent chacun un canal pour le second émetteur-récepteur sans fil (12) ; et
le sélecteur de canal (14) est configuré de manière à définir l'ordre de priorité de canaux à sélectionner qui sont disponibles, sur la base de la condition selon laquelle un canal présentant une plus petite quantité trouvée par l'administrateur de canal (14) se voit affecter un niveau de priorité supérieur.

8. Dispositif de communication (10) de type utilisé dans un réseau sans fil selon la revendication 1, dans lequel :
l'administrateur de canal (14) présente :
une liste noire, dont chaque élément présente des informations sur l'identité contenue dans un paquet lorsque le paquet transmis entre un autre dispositif de communication et un autre appareil est reçu par le second émetteur-récepteur sans fil (12), et sur le canal pour la transmission du paquet ; et
une liste blanche, dont chaque élément présente des informations sur l'identité d'un quelconque autre dispositif de communication, exclu de la liste noire, sur de quelconques autres dispositifs de communication dont chacun communique par le biais du premier émetteur-récepteur sans fil (11), et sur ledit canal qui est utilisé par le dispositif de communication en vue de communiquer avec ledit autre appareil ; et
le sélecteur de canal (13) est configuré de manière à définir l'ordre de priorité de canaux à sélectionner qui sont disponibles, sur la base de la condition selon laquelle chaque canal inscrit sur la liste blanche se voit affecter un niveau de priorité supérieur à celui de chaque canal inscrit sur la liste noire.

9. Dispositif de communication (10) de type utilisé dans un réseau sans fil selon la revendication 8, dans lequel le sélecteur de canal (13) est configuré de manière à, lorsqu'un canal est inscrit sur la liste blanche et utilisé pour un quelconque autre dispositif de communication, définir l'ordre de priorité de canaux à sélectionner qui sont disponibles, sur la base de la condition selon laquelle le canal se voit affecter un niveau de priorité supérieur à celui de chaque canal, non utilisé pour un quelconque autre dispositif de communication, parmi les canaux inscrits sur la liste blanche.

10. Dispositif de communication (10) de type utilisé dans un réseau sans fil selon la revendication 8, dans lequel le sélecteur de canal (13) est configuré de manière à, lorsque tous les canaux qui sont disponibles sont inscrits sur la liste noire, définir l'ordre de priorité de canaux à sélectionner qui sont disponibles, sur la base de la condition selon laquelle un canal, présentant une plus petite quantité de quelconques autres dispositifs de communication pour lesquels chacune des informations sur l'identité est inscrite sur la liste noire, se voit affecter un niveau de priorité supérieur.

11. Dispositif de communication (10) de type utilisé dans un réseau sans fil selon l'une quelconque des revendications 1 à 10, dans lequel :
le premier émetteur-récepteur sans fil (11) présente une fonction pour transmettre des données de relevé de compteur par le biais d'un compteur installé dans un équipement grand public au niveau de la station principale (20), et une fonction pour recevoir une instruction en provenance de la station principale (20) ; et
le second émetteur-récepteur sans fil (12) est configuré de manière à communiquer avec l'appareil (40) dans l'équipement grand public.
